# EUROPEAN PATENT APPLICATION

(11) **EP 2 679 798 A1**
(43) Date of publication of application: **01.01.2014**
(21) Application number: 12749686.7
(22) Date of filing: 20.02.2012
(51) Int. Cl.: F02M 37/00, F02D 19/12

(54) **MIXED FUEL GENERATION METHOD, MIXED FUEL GENERATION DEVICE AND FUEL SUPPLY DEVICE**

(30) Priority: 22.02.2011 JP 2011036044
(71) Applicant: Ito Racing Service Co., Ltd,, Okazaki-shi, Aichi 444-3441 (JP)
(72) Inventor: ITO Takeshiro, Okazaki-shi Aichi 444-3441 (JP)
(74) Representative: Vogel, Andreas
(86) International application number: PCT/JP2012/053997
(87) International publication number: WO 2012/115048

(57) **Abstract**

A mixed fuel generation method comprises a step of mixing a fuel oil and at least one additional fluid other than the fuel oil, wherein one of the additional fluids is water, and a specific ratio that is a ratio of a volume of the water to a volume of the mixed fuel is 6% or less.

## Description

### CROSS-REFERENCE TO RELATED APPLICATIONS

This international application claims the priority of Japanese Patent Application No. 2011-36044 filed February 22, 2011 in the Japan Patent Office, and the entire disclosure of which is incorporated herein by reference.

### TECHNICAL FIELD

The present invention relates to a mixed fuel generation method to generate a mixed fuel, and a mixed fuel generation device. Further, the present invention relates to a fuel supply device that supplies a mixed fuel generated by the mixed fuel generation device as a fuel to a combustion device that combusts fuel.

### BACKGROUND ART

Conventionally, a mixed fuel generation device is known that generates a mixed fuel in which at least fuel oil (e.g., gasoline and light oil) and water are mixed (for example, see Patent Document 1).
In the mixed fuel generation device described in Patent Document 1, a fuel oil and water are mixed at a predetermined ratio. A mixed fuel obtained by the mixing at the predetermined ratio is supplied to an internal combustion engine.

### RELATED ART DOCUMENTS

### PATENT DOCUMENTS

Patent Document 1: Japanese Unexamined Patent Application Publication No. 59-77067

### SUMMARY OF THE INVENTION

### PROBLEMS TO BE SOLVED BY THE INVENTION

Like the mixed fuel generation device described in Patent Document 1, by supplying to the internal combustion engine and combusting therein the mixed fuel generated in the mixed fuel generation device, combustion efficiency can be improved as compared with combustion of only an ordinary fuel oil (e.g., gasoline and light oil).

In consideration of environmental problems in recent years, a mixed fuel that can further improve combustion efficiency is demanded in a combustion device that is a device for combusting a fuel (for example, a heat engine such as an internal combustion engine and an external combustion engine, and a device such as a boiler). Furthermore, if the combustion device is a heat engine, a mixed fuel is demanded that can further improve an output of the heat engine.

However, although it is described in Patent Document 1 that a mixing ratio of water and fuel oil is set to be a predetermined ratio, no particular description whatsoever is given about the predetermined ratio, and its optimum value is unknown. In other words, a mixed fuel that meets the demand to improve the output of the heat engine has not actually been acquired so far.

It would be desirable that a technique is provided for generating a mixed fuel that can improve at least one of the combustion efficiency and the output of the combustion device.

### MEANS FOR SOLVING THE PROBLEMS

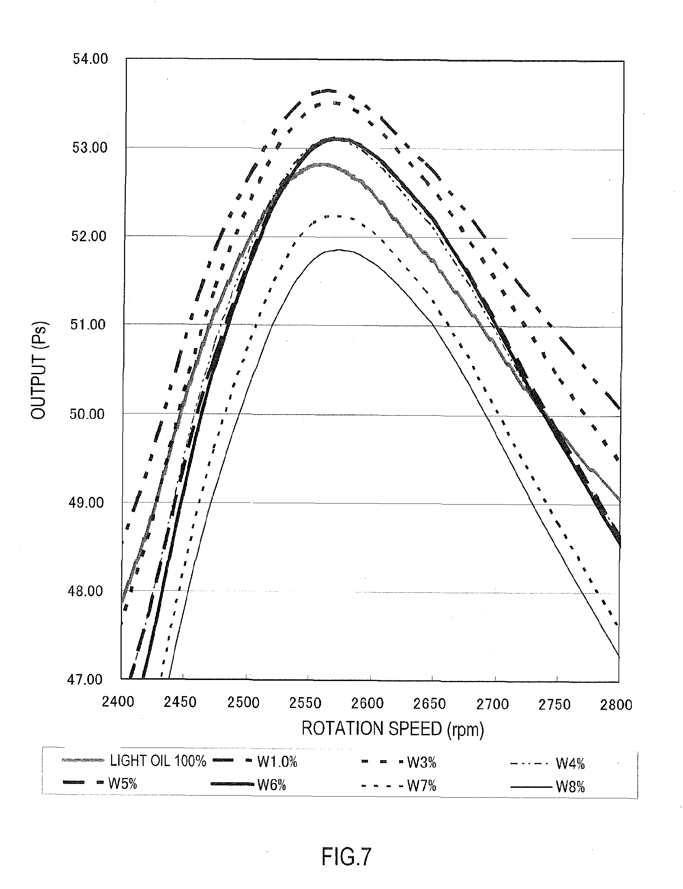

The present invention, which has been made in order to achieve the above object, relates to a mixed fuel generation method. The method includes a step of mixing a fuel oil and at least one additional fluid other than the fuel oil. Inventors of the present invention generated a plurality of mixed fuels, each of which having a different specific ratio. The specific ratio is a ratio of a volume of water (i.e., one of the additional fluids) to a volume of the mixed fuel. The inventors conducted an experiment on an output of an internal combustion engine (i.e., an example of the heat engine) when each of the mixed fuels was combusted in the internal combustion engine. FIG. 7 shows a result of the experiment. FIG. 7 is a graph that shows a relation between a rotation speed ([rpm]) of the internal combustion engine (i.e., rotation speed per unit time) and an output ([Ps]) at each of the rotation speeds per the mixed fuel having a different specific ratio. It should be noted that "W" in the figure means the specific ratio. For example, "W1%" indicates that the specific ratio is 1%, and "W8%" indicates that the specific ratio is 8%.

As can be seen from FIG. 7, the inventors of the present invention found that the output is improved in a rotation speed range having a maximum output of the internal combustion engine (rotation speed of about 2520 to 2600 [rpm] in FIG. 7), if the specific ratio is 6% or less, as compared with a case where only the fuel oil (here, 100% light oil) is combusted in the internal combustion engine.

The mixed fuel generation method of the present invention based on this finding is characterized in that one of the additional fluids is water, and the specific ratio is 6% or less. However, 0% is excluded from the specific ratio of the present invention.

According to the present invention, it is possible to provide a technique for generating a mixed fuel that can further improve the output of the internal combustion engine, as compared with the case where only the fuel oil is combusted in the internal combustion engine.

According to the mixed fuel having the specific ratio of 6% or less, emission discharged (e.g., particulate matter, nitrogen oxide (NOx), etc.) when the mixed fuel is combusted in a combustion device can be reduced. The combustion device is a device for combusting fuel.

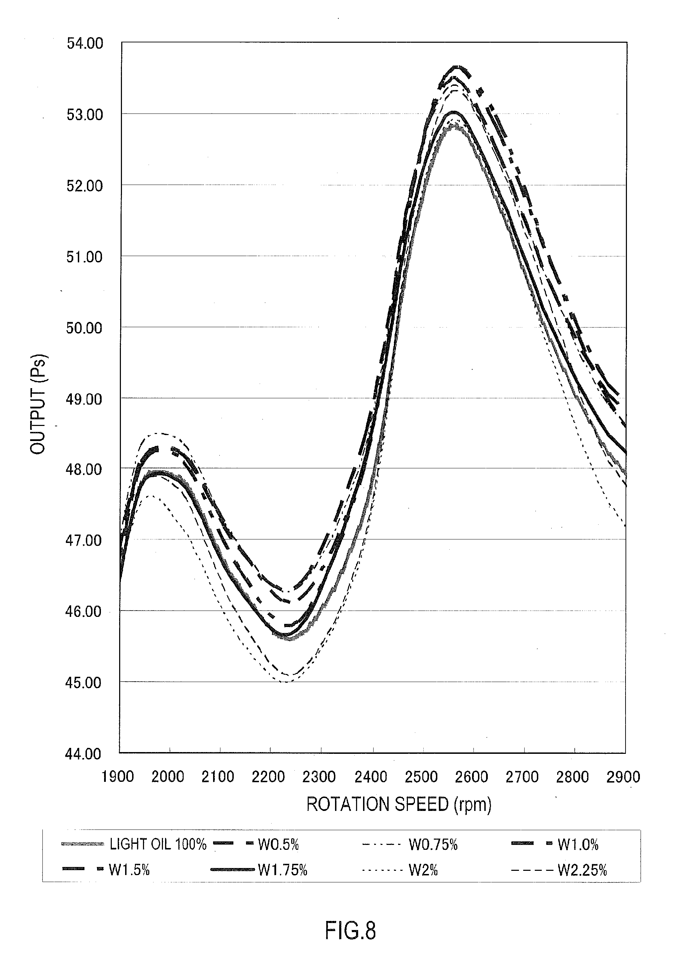

FIG. 8 shows a result of the above experiment conducted by the inventors of the present invention in more detail. FIG. 8 is a graph showing a relation between the rotation speed and the output at each of the rotation speeds of the internal combustion engine per the mixed fuel having a different specific ratio. In FIG. 8 as well, "W" in the figure refers to the specific ratio. For example, "W0.5%" indicates that the specific ratio is 0.5%, and "W2.25%" indicates that the specific ratio is 2.25%.

As can be seen from FIG. 8, it was found that, if the specific ratio is 1.75% or less, the output is improved in a practical rotation speed range (rotation speed of 1900 to 2900 [rpm] in the figure) of the internal combustion engine, as compared with the case where only the fuel oil (here, 100% light oil) is combusted in the internal combustion engine.

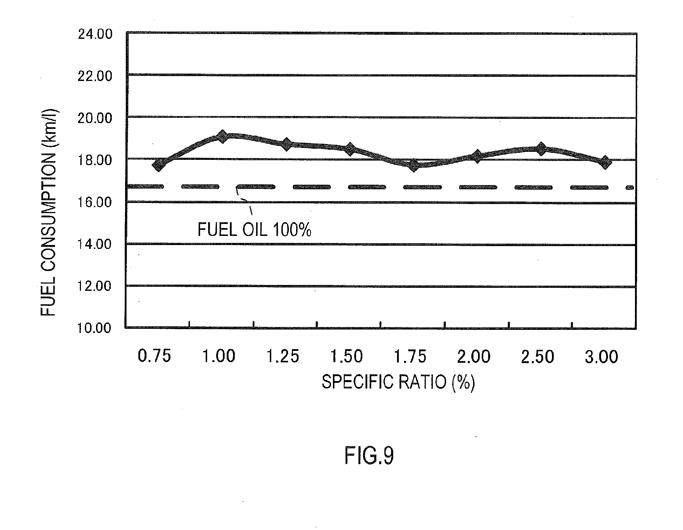

Further, the inventors of the present invention generated a plurality of mixed fuels, each of which having a different specific ratio, and examined, by experiment, fuel consumption of an internal combustion engine (i.e., an example of the combustion device) when the mixed fuel in each specific ratio was combusted in the internal combustion engine. FIG. 9 shows a result of the experiment. FIG. 9 is a graph showing a relation between each specific ratio in the mixed fuel and the fuel consumption in the each specific ratio.

As can be seen from FIG. 9, it was found that, if the specific ratio is 3% or less, the fuel consumption is reduced as compared with the case where only the fuel oil (i.e., 100% light oil) is combusted in the internal combustion engine. In other words, it was found that the fuel consumption is improved.

In the mixed fuel generation method of the present invention, it is preferable that the specific ratio is 3% or less, in particular, 1.75% or less.
In the mixed fuel generation method of the present invention, one of the additional fluids may be air.

Even if air is mixed as one of the additional fluids as such, it is possible to improve the combustion efficiency as well as the output of the internal combustion engine.
In the mixed fuel generation device of the present invention, air as the additional fluid may include hydrogen.

Even if hydrogen as the additional fluid is mixed with a fuel oil as such, it is possible, by combusting the mixed fuel in a heat engine such as an internal combustion engine, to improve the combustion efficiency as well as the output of the internal combustion engine.

The present invention may be configured as a mixed fuel generation device for implementing a method of generating mixed fuel.
The mixed fuel generation device of the present invention includes a fuel tank, a water tank, a fuel oil delivery unit, a water delivery unit, and a mixing tank.

The fuel tank stores a fuel oil. The water tank stores water that is at least one of the additional fluids. The fuel oil delivery unit delivers the fuel oil from the fuel tank to the mixing tank. The water delivery unit delivers water from the water tank to the mixing tank.

In the mixing tank, a mixture tank stores the fuel oil delivered by the fuel oil delivery unit and the water delivered by the water delivery unit. A ratio between the water and the fuel oil is a ratio determined by a volume of the fuel oil delivered by the fuel oil delivery unit to a volume of the water delivered by the water delivery unit. Further, in the mixing tank, a mixer mixes at least the fuel oil and the water stored in the mixture tank at the ratio of the volume of the fuel oil to the volume of the water stored in the mixture tank to generate a mixed fuel.

It should be noted that the water delivery unit in the mixed fuel generation device of the present invention defines (controls) an amount of the water delivered to the mixing tank from the water tank so that the specific ratio which is a ratio of the volume of the water to the volume of the mixed fuel is 6% or less.

According to the mixed fuel generation device, it is possible to implement the mixed fuel generation method according to the present invention. As a result, according to the mixed fuel generation device of the present invention as compared with the case where only the fuel oil is combusted in the internal combustion engine (i.e., an example of the combustion device), it is possible to generate a mixed fuel that can improve an output of the internal combustion engine.

Further, in the mixed fuel generation device of the present invention, the water delivery unit may define (may control) an amount of the water delivered to the mixing tank from the water tank so that the specific ratio is 1.75% or less.

According to the mixed fuel generation device as above, it is possible to implement the mixed fuel generation method according to the present invention. As a result, according to the mixed fuel generation device of the present invention, it is possible, as compared with the case where only the fuel oil is combusted in the internal combustion engine, to improve the output of the internal combustion engine, as well as to generate a mixed fuel that further improves the combustion efficiency.

In the mixed fuel generation device of the present invention, the water tank may be provided with an electrolysis mechanism that electrolyzes the water stored in the water tank. In this case, the mixed fuel generation device may include a first gas supply system having a flow path that supplies to the mixture tank a gas generated by the water electrolyzed by the electrolysis mechanism. Furthermore, the mixer in the mixed fuel generation device as such may mix the gas supplied to the mixture tank by the first gas supply system with the fuel oil and the water, as one of the additional fluids.

According to the mixed fuel generation device as such, it is possible to implement the mixed fuel generation device according to the present invention. If the mixed fuel generated in the mixed fuel generation device of the present invention is combusted in the internal combustion engine, it is possible to improve the combustion efficiency as well as the output of the internal combustion engine.

The present invention may be also configured as a fuel supply device that supplies the mixed fuel generated in the mixed fuel generation device to the combustion device.
The fuel supply device of the present invention includes the mixed fuel generation device, a fuel supply system, and a fuel re-supply system. The fuel supply system has a flow path that supplies to a combustion device the mixed fuel generated by the mixed fuel generation device. The fuel re-supply system has a re-supply pipe, which is a pipe that supplies unconsumed fuel to the combustion device. Here, the unconsumed fuel is defined as at least one of the mixed fuel that has not been consumed in the combustion device, out of the mixed fuel supplied to the combustion device in the fuel supply system, and the fuel oil that has not been consumed in the combustion device, out of the fuel oil supplied to the combustion device.

In the fuel re-supply system of the fuel supply device of the present invention, an adiabatic process is applied to at least part of an outer surface of the re-supply pipe exposed to outside air. The adiabatic process in the present invention includes a process for improving thermal insulation. For example, the process could be to wrap the re-supply pipe with an insulation material, or to apply high thermal insulation coating to the outer surface of the re-supply pipe.

According to the fuel supply device, decrease in temperature of the fuel that has not been consumed in the combustion device when flowing through the re-supply pipe can be suppressed. As a result, for example, even if the fuel supply system is used in cold climates, it is possible to prevent water in the unconsumed fuel flowing through the re-supply pipe from freezing.

It should be noted that the combustion device in the present invention is a device for combusting fuel, e.g., a device such as a heat engine including an internal combustion engine and an external combustion engine, and a boiler, etc.
In the fuel supply device of the present invention, the re-supply pipe of the fuel re-supply system may be provided to pass through the water stored in the water tank.

According to the fuel supply device, for example, even if the fuel supply device is used in cold climates, it is possible to prevent the water stored in the water tank from freezing since a temperature of the unconsumed fuel flowing through the re-supply pipe is high.

In the fuel supply device of the present invention, the re-supply pipe of the fuel re-supply system may be provided to pass through the water stored in the mixture tank.
According to the fuel supply device as such, because a temperature of the unconsumed fuel flowing through the re-supply pipe can be made higher, for example, even if the fuel supply device is used in cold climates, it is possible to prevent the water stored in the mixture tank from freezing.

In the fuel supply device of the present invention, the water tank provided in the mixed fuel generation device may also include an electrolysis mechanism that electrolyzes the water stored in the water tank. The fuel supply device as such may include a second gas supply system. The second gas supply system may have a flow path that supplies to the combustion device a gas generated by the water electrolyzed by the electrolysis mechanism.

According to the fuel supply mechanism as such, it is possible to further improve the combustion efficiency in the combustion device.
The fuel supply device of the present invention may include a switching valve that switches the fuel supplied to the combustion device from the mixed fuel flowing in the fuel supply system to the unconsumed fuel flowing in the fuel re-supply system, when the unconsumed fuel flowing through the re-supply pipe increases.

According to the fuel supply device as above, switching can be performed from the mixed fuel supplied to the combustion device in the fuel supply system to a mixed fuel supplied to the combustion device in the fuel re-supply system.
In the switching valve in the fuel supply device of the present invention, when an amount of the unconsumed fuel flowing through the re-supply pipe reaches a predetermined amount or more, a first valve body is driven to open a fuel passage hole. In conjunction with the driving of the first valve body, a second valve body may be driven so as to block a flow path of the fuel supply system, and to expand a flow path of the fuel re-supply system. The fuel passage hole of the present invention is part of the flow path of the fuel re-supply system, and is sealed by the first valve body. The fuel passage hole is a hole which is smaller in area than the flow path of the fuel supply system.

According to the fuel supply device of the present invention configured as above, when the amount of the mixed fuel flowing through the re-supply pipe increases, the mixed fuel flowing through the re-supply pipe can be reliably supplied by the combustion device.

When supplying a mixed fuel to an internal combustion engine (i.e., an example of the combustion device) that consumes a large amount of fuel like an internal combustion engine mounted on a truck, the amount of the mixed fuel flowing through the fuel supply system increases and a flow rate of the mixed fuel also increases. At this time, since a pressure inside the flow path of the fuel supply system becomes negative with respect to a pressure inside the flow path of the fuel re-supply system, it may become difficult for an ordinary switching valve to switch from the mixed fuel supplied to the combustion device in the fuel supply system to the unconsumed fuel supplied to the combustion device in the re-supply system.

Meanwhile, in the fuel supply device of the present invention, since the fuel passage hole in the switching valve is smaller in area than the flow path of the fuel supply system, even if the pressure inside the flow path of the fuel re-supply system becomes negative with respect to the pressure inside the flow path of the fuel re-supply system, it is possible to easily drive the first valve body.

Therefore, in the fuel supply device of the present invention, the first valve body is driven, with the increase in the amount of the unconsumed fuel flowing through the re-supply pipe, and the fuel passage hole is opened. Then, when the fuel passage hole is opened and acts as a flow path for the fuel re-supply system, the driving of the second valve body is facilitated. Therefore, owing to the blocking of the flow path of the fuel supply system by the second valve body in conjunction with the driving of the first valve body, as well as the expansion of the flow path for the fuel re-supply system, it is possible to more reliably supply the unconsumed fuel flowing through the re-supply pipe to the combustion device.

In the fuel supply device of the present invention, the combustion device may be an internal combustion engine mounted on an automobile, and the fuel supply device may be mounted on the automobile.
According to the fuel supply device as such, in the automobile on which the fuel supply system is mounted, improvement in output of the internal combustion engine as well as combustion efficiency of the internal combustion engine can be implemented.

In the fuel supply device of the present invention, the water delivery unit may define the amount of water delivered to the mixing tank from the water tank so that the specific ratio is 1.75% or less.
Further, in the fuel supply device of the present invention, the water tank may be provided with an electrolysis mechanism that electrolyzes the water stored in the water tank, and with a first gas supply system having a flow path that supplies to the mixture tank a gas generated by electrolysis of the water by the electrolysis mechanism. Further, the mixer may mix with fuel oil and water the gas supplied to the mixture tank by the first gas supply system as one of the additional fluid.

### BRIEF DESCRIPTION OF THE DRAWINGS

FIG. 1 is a diagram showing a schematic configuration of a fuel supply system to which the present invention is applied.
FIG. 2 is a diagram showing an internal structure of a water tank in an embodiment.
FIG. 3 is a perspective view of a tank body in the embodiment.
FIG. 4 is a front view of the tank body in the embodiment.
FIG. 5 is a diagram showing a schematic configuration of a switching valve in the embodiment.
FIG. 6 is a block diagram showing a schematic configuration of a control system of the fuel supply system.
FIG. 7 is a graph showing an effect of the present invention.
FIG. 8 is a graph showing an effect of the present invention.
FIG. 9 is a graph showing an effect of the present invention.

### EXPLANATION OF REFERENCE NUMERALS

1 ... fuel supply system, 5 ... internal combustion engine, 7, 8 ... insulation material, 9 ... gas flow pipe, 10 ... mixed fuel generation device, 11 ... mixing tank, 12 ... tank body, 13 ... first mixture tank, 14 ... second mixture tank, 15 ... third mixture tank, 16 ... first communication passage, 17 ... second communication passage, 18 ... third communication passage, 31 ... mixed fuel storage tank, 41, 42 ... mixer, 43 ... mixer body, 44 ... transportation pipe, 45 ... suction unit, 46 ... pump, 50 ... fluid supply system, 51 ... fuel oil transport system, 52 ... fuel tank, 53 ... fuel pipe, 54 ... fuel delivery pump, 56 ... water transport system, 57 ... water tank, 58 ... water pipe, 59 ... water delivery pump, 62 ... vibrator, 63 ... oscillator, 64 ... power supply, 65 ... electrode plate, 66 ... gas flow pipe, 71 ... lubricating oil transport system, 80 ... fuel supply system, 81 ... direct fuel supply system, 82 ... fuel re-supply system, 83 ... mixed fuel flow pipe, 84 ... fuel oil flow pipe, 85 ... three-way valve, 87 ... re-supply pipe, 88 ... first heat exchange unit, 89 ... second heat exchange unit, 90 ... switching valve, 91 ... valve case, 92 ... float, 93 ... first valve body, 94 ... second valve body, 95 ... oil seal, 102 ... accumulation chamber, 103 ... flow passage, 104 ... valve guide portion, 105 ... upper valve guide, 106 ... lower valve guide, 107 ... hole, 108 ... stem, 109 ... locking portion, 110 ... valve body, 111 ... flow path blocking portion, 112 ... tubular portion, 113 ... box portion, 114 ... first water-stop portion, 115 ... hole, 116 ... fuel passage hole, 117 ... rod-like member, 118 ... second water-stop portion, 130 ... control system, 132 ... control unit, Fl ... mixed fuel, Flc ... unconsumed fuel, Fo ... fuel oil, Gs ... gas, Lb ... lubricating oil, Wt ... water

### MODE FOR CARRYING OUT THE INVENTION

Hereinafter, an embodiment of the present invention will be described with reference to the drawings.

### <Fuel supply system>

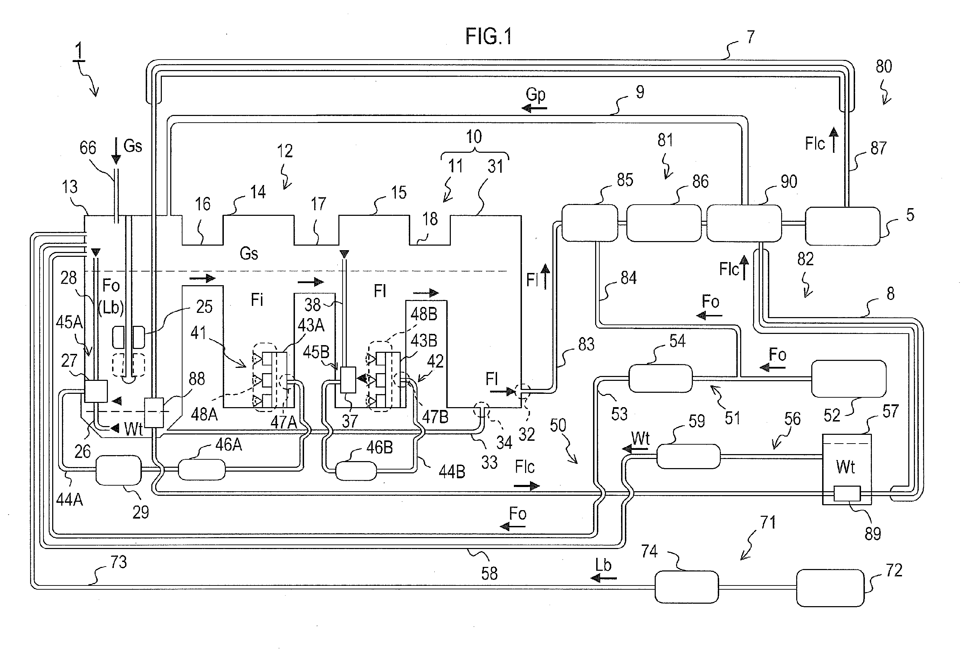

A fuel supply system 1 shown in FIG. 1 is a system used by being mounted on an automobile, and for supplying fuel to an internal combustion engine 5 mounted on the automobile. The internal combustion engine 5 in the present embodiment is a well-known diesel engine using light oil as a fuel oil Fo.

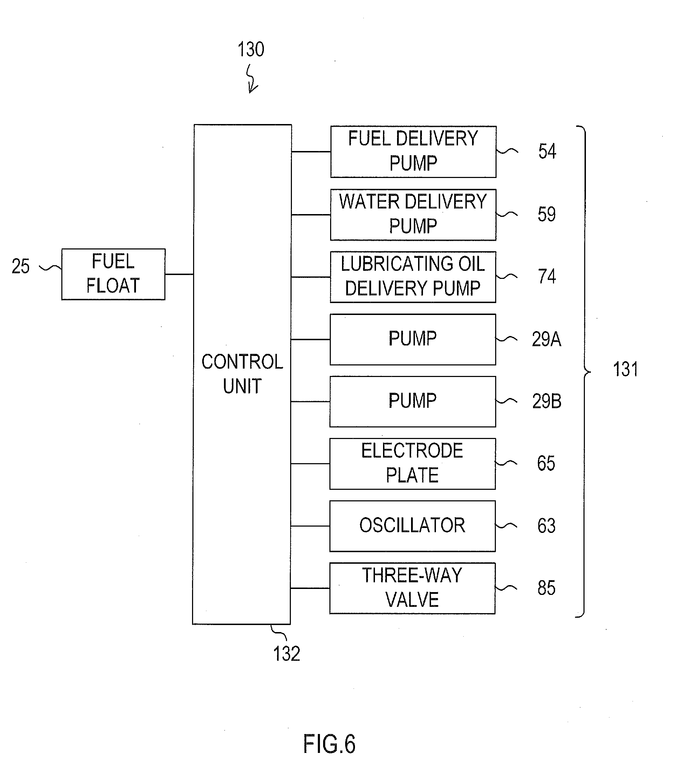

The fuel supply system 1 shown in FIG. 1 includes a mixed fuel generation device 10, a fluid supply system 50, a fuel supply system 80, and a control system 130 (see FIG. 6). The mixed fuel generation device 10 generates a fuel (hereinafter, referred to as mixed fuel) Fl which is obtained by mixing at least one additional fluid with the fuel oil Fo. The fluid supply system 50 supplies the fuel oil and the additional fluid Fo to the mixed fuel generation device 10. The fuel supply system 80 supplies the mixed fuel Fl generated in the mixed fuel generation device 10 or the fuel oil Fo to an internal combustion engine 5. The control system 130 controls at least the fluid supply system 50.

The mixed fuel generation device 10 has a mixing tank 11, and a mixed fuel storage tank 31. The mixing tank 11 generates the mixed fuel Fl (so-called emulsion fuel) by storing the fuel oil Fo and water Wt (i.e., one of the additional fluids) supplied by the fluid supply system 50 at a ratio supplied by the fluid supply system 50 and mixing at least the fuel oil Fo and the water Wt. The mixed fuel storage tank 31 stores the mixed fuel Fl generated in the mixing tank 11.

### <Fluid supply system>

The fluid supply system 50 includes a fuel oil transport system 51, a water transport system 56, and a lubricating oil transport system 71. The fuel oil transport system 51 supplies the fuel oil Fo to the mixed fuel generation device 10. The water transport system 56 supplies the water Wt to the mixed fuel generation device 10. The lubricating oil transport system 71 supplies a lubricating oil Lb to the mixed fuel generation device 10.

The fuel oil transport system 51 includes a fuel tank 52, a fuel pipe 53, and a fuel delivery pump 54. The fuel tank 52 stores the fuel oil Fo. The fuel pipe 53 is a pipe forming a flow path through which the fuel oil Fo stored in the fuel tank 52 flows to the mixed fuel generation device 10. The fuel delivery pump 54 is provided to the fuel pipe 53, for delivery of the fuel oil Fo stored in the fuel tank 52 to the mixed fuel generation device 10.

The water transport system 56 includes a water tank 57, a water pipe 58, and a water delivery pump 59. The water tank 57 stores the water Wt which is one of the additional fluids. The water pipe 58 is a pipe forming a flow path through which the water Wt stored in the water tank 57 flows to the mixed fuel generation device 10. The water delivery pump 59 is provided to the water pipe 58, for delivery of the water Wt stored in the water tank 57 to the mixed fuel generation device 10.

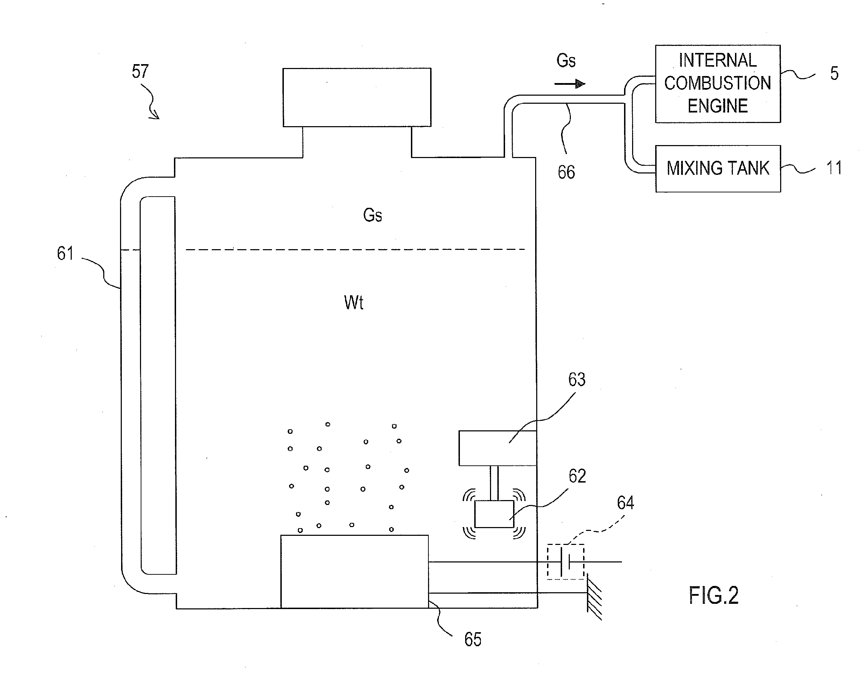

The water tank 57, as shown in FIG. 2, is provided with a level gauge 61 showing an amount of the water Wt stored in the water tank 57. Further, inside the water tank 57, a vibrator 62 that is a member for stirring the water Wt stored in the water tank 57, and an oscillator 63 that drives to vibrate the vibrator 62, are provided.

Also, inside the water tank 57, an electrode plate 65 connected to a power supply 64 is provided. The electrode plate 65 is disposed in the vicinity of a bottom surface of the water tank 57 so as to be immersed in the water Wt stored in the water tank 57.

When the electrode plate 65 disposed in the water tank 37 is electrically conducted, the electrode plate 65 functions as an electrolysis mechanism of the present invention. The water Wt stored in the water tank 57 is electrolyzed by the conduction of the electrode plates 65, so that a gas Gs (so-called brown gas) containing oxygen and hydrogen is generated. The gas Gs generated as such flows to at least one of the mixing tank 11 and an intake port of the internal combustion engine 5 through the gas flow pipe 66 connected to a lid of the water tank 57, as one of the additional fluids.

As shown in FIG. 1, the lubricating oil transport system 71 includes a lubricating oil tank 72, a lubricating oil pipe 73, and a lubricating oil delivery pump 74. The lubricating oil tank 72 stores the lubricating oil Lb which is one of the additional fluids. The lubricating oil pipe 73 is a pipe forming a flow path through which the lubricating oil Lb stored in the lubricating oil tank 72 flows to the mixed fuel generation device 10. The lubricating oil delivery pump 74 is provided in the lubricating oil pipe 73, for delivery of the lubricating oil Lb stored in the lubricating oil tank 72 to the mixed fuel generation device 10.

A volume of the water Wt the water delivery pump 59 delivers is set so that a specific ratio that represents a ratio of the volume of the water to a total volume of all liquids stored in the mixing tank 11 (i.e., the fuel oil Fo, the lubricating oil Lb, and the water Wt) is 6% or less (excluding 0%). In other words, a ratio of an amount of the water Wt the water delivery pump 59 delivers per unit time, an amount of the lubricating oil Lb the lubricating oil delivery pump 74 delivers per unit time, and an amount of the fuel oil Fo the fuel delivery pump 54 delivers per unit time is set so that the specific ratio is 6% or less.

As a method for adjusting the amount of the fluid each of the water delivery pump 59, the lubricating oil delivery pump 74, and the fuel delivery pump 54 delivers, a method as below is adopted in the present embodiment. That is, using the pumps 54, 59, and 74, of which discharge capacity per unit time is set to be common, driving time of each of the pumps 54, 59, and 74 is controlled.

It should be noted that the specific ratio may be any value if less than 6% (excluding 0%). The specific ratio may be 3% or less, or further, 1.75% or less.

### <Mixing tank>

The mixing tank 11 includes a tank body 12 and mixers 41 and 42. The tank body 12 stores the fuel oil Fo, the water Wt, the lubricating oil Lb, and the gas Gs. The mixers 41 and 42 mix the fuel oil Fo and the additional fluids stored in the tank body 12.

The mixer 41 and 42 include a mixer body 43, a transportation pipe 44, a suction unit 45, and a pump 46. The mixer body 43 generates the mixed fuel Fl by mixing the fuel oil Fo and the water Wt, the lubricating oil Lb, and the gas Gs as the additional fluids. The transportation pipe 44 forms a flow path through which the fuel oil Fo and the additional fluids flow. The suction unit 45 introduces the additional fluids and the fuel oil Fo stored in the tank body 12 into the transportation pipe 44. The pump 46 is provided to the transportation pipe 44, for delivery of at least one additional fluid and the fuel oil Fo introduced by the suction unit 45 to the mixer body 43.

The mixer body 43 mixes the additional fluid and the fuel oil Fo introduced from an inlet port 47, and discharges the mixed fuel Fl from at least one (three in FIG. 1) outlet port 48.
In the present embodiment, the mixer body 43, for example, may be configured as described in Japanese Unexamined Patent Application Publication No. 2011-7081.

Specifically, the mixer body 43 has at least one flow path for the additional fluid and the fuel oil Fo inside the mixer body 43. This flow path is formed like a nozzle of which a cross section is narrowed toward to the outlet port 48 from the inlet port 47 (i.e., tapered nozzle). On the flow path, an impeller (e.g., a rectifying fin having a plurality of blades like turbine blades) is fixed in a direction orthogonal to an axial direction of the flow path, so that the additional fluid and the fuel oil Fo are stirred.

In the mixer body 43, the inlet port 47 is provided so that the additional fluid and the fuel Fo introduced into the flow path from the inlet port 47 produces a swirling flow along a circumferential direction. Specifically, the inlet port 47 is provided in a position such that the additional fluid and the fuel oil Fo flow into the flow path tangentially with respect to the flow path. The additional fluid and the fuel Fo flowing into the flow path becomes a swirling flow, and, by being stirred by the impeller, the additional fluid is mixed with the fuel oil Fo. The mixed fuel Fl generated in this way is discharged into the mixing tank 11 from the outlet port 48 of the mixer body 43.

In the following, when it is necessary to distinguish the components of the mixer 41 (i.e., mixer body 43, transportation pipe 44, suction unit 45, and pump 46) from the components of the mixer 42, a symbol 'A' is added to the components of the mixer 41, and a symbol 'B' is added to the components of the mixer 42.

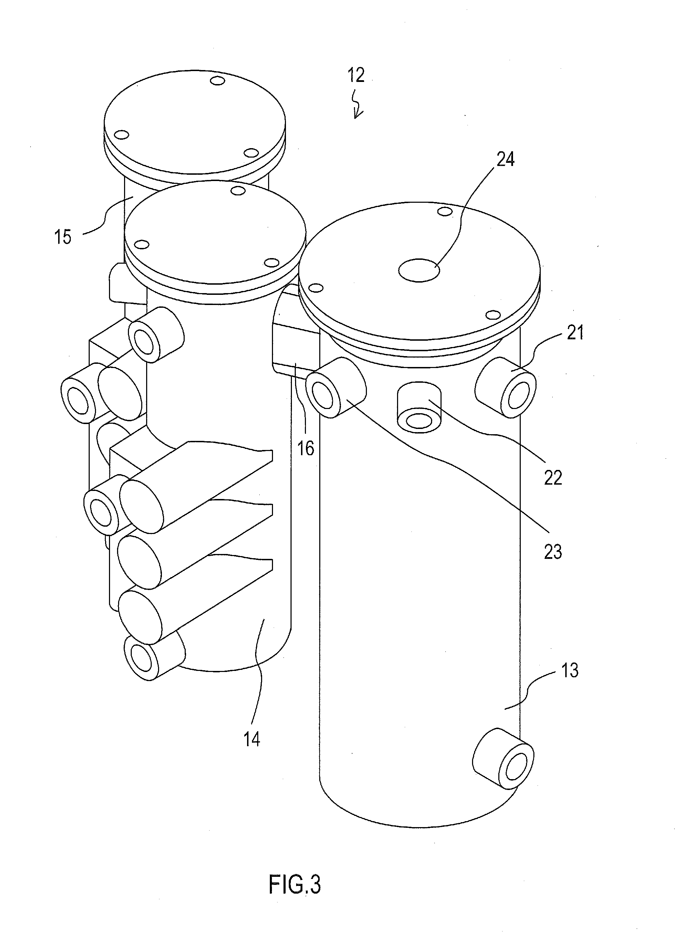

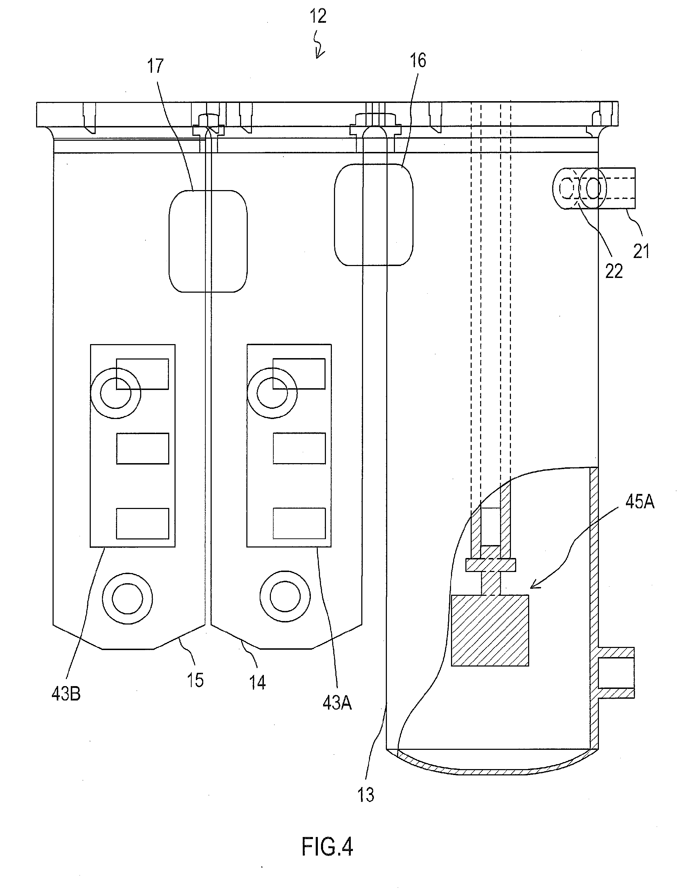

Next, as shown in FIGS. 1, 3, and 4, the tank body 12 is provided with a first mixture tank 13, a second mixture tank 14, and a third mixture tank 15. Each of the first mixture tank 13, the second mixture tank 14, and the third mixture tank 15 is formed into a bottomed cylindrical shape.

The first mixture tank 13 and the second mixture tank 14 are connected via a first communication passage 16. The second mixture tank 14 and the third mixture tank 15 are connected via a second communication passage 17. Further, the third mixture tank 15 and the mixed fuel storage tank 31 (i.e., the tank body 12 and the mixed fuel storage tank 31) are connected via a third communication passage 18. The first communication passage 16, the second communication passage 17, and the third communication passage 18 are provided in this order to come closer to a bottom surface of the mixing tank 11. In other words, the first communication passage 16, the second communication passage 17, and the third communication passage 18 are provided in this order to be positioned lower.

The first mixture tank 13 includes a fuel inlet portion 21 to which the fuel pipe 53 is connected, a water inlet portion 22 to which the water pipe 58 is connected, a lubricating oil inlet portion 23 to which the lubricating oil pipe 73 is connected, and a gas inlet portion 24 to which the gas flow pipe 66 is connected.

The first mixture tank 13 as such stores the fuel oil Fo supplied by the fuel oil transport system 51, the water Wt supplied by the water transport system 56, the lubricating oil Lb supplied by the lubricating oil transport system 71, and the gas Gs introduced into the first mixture tank 13 through the gas flow pipe 66. In the first mixture tank 13, because density is small in the order of the water Wt, the fuel oil Fo (and the lubricating oil Lb), and the gas Gs, a layer of the water Wt, a layer of the fuel oil Fo (and the lubricating oil Lb), and a layer of the gas Gs are formed in order from a bottom surface of the first mixture tank 13.

Furthermore, the first mixture tank 13 is provided with a fuel float 25 that detects the amount of the fuel oil Fo in the first tank 13, and an intake portion 45A of the mixer 41. The intake portion 45A of the mixer 41 is provided with a water inlet portion 26 that takes in the water Wt inside the first mixture tank 13, and an oil suction portion 27 that takes in the fuel oil Fo and the lubricating oil Lb, and an air intake portion 28 that takes in the gas Gs. Among these portions, an inlet port of the water Wt in the water inlet portion 26 is disposed near the bottom surface inside the first mixture tank 13. Further, the air intake portion 28 is a pipe connected in a manner that the inlet port is positioned above a liquid surface of the fuel oil Fo and the lubricating oil Lb inside the first mixture tank 13.

The fluids (i.e., water Wt, gas Gs, fuel oil Fo, and lubricating oil Lb) taken in by the water inlet portion 26, the air intake portion 28, and the oil suction portion 27 flow through the transportation pipe 44A, by driving of the pump 46A. After passing through the filter 29 provided in the transportation pipe 44A, the fluids are delivered to the mixer body 43A provided inside the second mixture tank 14. Then, in the mixer body 43A, a fluid (hereinafter, referred to as intermediate fuel Fi) is generated by mixing the water Wt, the gas Gs and the lubricating oil Lb with the fuel oil Fo, and the intermediate fuel Fi is discharged into the second mixture tank 14.

Into the second mixture tank 14, the fuel oil Fo (and the lubricating oil Lb) flows from the first mixture tank 13 through the first communication passage 16. Also, the intermediate fuel Fi discharged from the mixer body 43A is stored in the second mixture tank 14.

The fuel oil Fo and the intermediate fuel Fi stored in the second mixture tank 14 flow to the third mixture tank 15 via the second communication passage 17.
Inside the third mixture tank 15, an intake portion 45B of the mixer 42 and a mixer body 43B of the mixer 42 are provided. In the intake portion 45B of the mixer 42, the oil suction portion 37 and the air intake portion 38 are provided. The oil suction portion 37 takes in the intermediate fuel Fi and the mixed fuel Fl. The air intake portion 38 takes in the gas Gs. The air intake portion 38 is a pipe connected in a manner that an inlet port is positioned above the liquid level of the mixed fuel Fl inside the third mixture tank 15.

In the mixer 42, the fluids taken in the air inlet portion 38 and the oil suction portion 37 (i.e., water Wt, gas Gs, fuel oil Fo, and lubricating oil Lb) flow through the transportation pipe 44B, by driving of the pump 46B, and are delivered to the mixer body 43B provided inside the third mixture tank 15. Then, in the mixer body 43B, a fluid (i.e., mixed fuel Fl) obtained by mixing the water Wt, the gas Gs, and the lubricating oil Lb with the fuel oil Fo is generated, and the mixed fuel Fl is discharged into the third mixture tank 15.

As a result, the mixed fuel Fl is stored in the third mixture tank 15. The mixed fuel Fl stored in the third mixture tank 15 flows into the mixed fuel storage tank 31 via the third communication passage 18.

The mixed fuel storage tank 31 is provided with a mixed fuel delivery portion 32 to which the fuel supply system 80 is connected, and a water return portion 34 to which a pipe 33 as a flow path to the first mixture tank 13 is connected. That is, if the mixed fuel Fl stored in the mixed fuel storage tank 31 is left for a long term without being supplied to the fuel supply system 80, the water Wt included in the mixed fuel Fl is separated. As a flow path for sending back to the first mixture tank 13, the water Wt separated in the mixed fuel storage tank 31, the pipe 33 is provided. Therefore, the water return portion 34 to which the pipe 33 is connected is provided on a bottom surface of the mixed fuel storage tank 31 so that the water Wt separated in the mixed fuel storage tank 31 is discharged to the pipe 33.

Moreover, the mixed fuel delivery unit 32 is provided in a manner to have a certain height from the bottom surface of the mixed fuel storage tank 31, so that the mixed fuel Fl is supplied to the fuel supply system 80. It is noted that the certain height indicates a position higher than a layer of the water Wt which is formed when the water Wt is separated in the mixed fuel storage tank 31.

In the present embodiment, the mixers 41 and 42 mix the fuel oil Fo, the lubricating oil Lb, the water Wt, and the gas Gs in a ratio of the fuel oil Fo, the lubricating oil Lb, the water Wt, and the gas Gs stored in the tank body 12. Therefore, in the mixed fuel Fl generated by the mixers 41 and 42, a ratio of a volume of the water Wt to a volume of the mixed fuel Fl (i.e., specific ratio) is 6% or less.

### <Fuel supply system>

Now, a description on the fuel supply system 80 will be given.

The fuel supply system 80 includes a direct fuel supply system 81 that supplies the mixed fuel Fl or the fuel oil Fo to the internal combustion engine 5, and a re-fuel supply system 82 that circulates, and supplies to the internal combustion engine 5, the mixed fuel Fl or the fuel oil Fo that has not been consumed (i.e., has been unconsumed) by the internal combustion engine 5 in the fuel supply system 1 (hereinafter, referred to as unconsumed fuel Flc).

The fuel direct supply system 81 includes a mixed fuel flow pipe 83 that is a pipe forming a flow path of the mixed fuel Fl to the internal combustion engine 5 from the mixed fuel storage tank 31, and a fuel oil flow pipe 84 that is a pipe forming a flow path of the oil Fo to the fuel to the internal combustion engine 5 from the fuel tank 52. Furthermore, the fuel direct supply system 81 includes a three-way valve 85, a filter 86, and a switching valve 90, provided on a flow path of the mixed fuel Fl to the internal combustion engine 5 from the mixed fuel storage tank 31, and on a flow path of the fuel oil Fo to the internal combustion engine 5 from the fuel tank 52.

When the mixed fuel flow pipe 83 and the fuel oil flow pipe 84 are connected to the three-way valve 85, and a working fluid having a specified pressure or more is supplied to the three-way valve 85, the three-way valve 85 switches the fuel supplied to the internal combustion engine 5 from the fuel oil Fo to the mixed fuel Fl. It should be noted that the mixed fuel flow pipe 83 and the fuel oil flow pipe 84 share a downstream side (i.e., internal combustion engine 5 side) of the three-way valve 85.

The fuel re-supply system 82 is connected to the internal combustion engine 5 via a relief valve (not shown), and is mainly configured from a re-supply pipe 87 which is a pipe that forms a flow path of the unconsumed fuel Flc.
The re-supply pipe 87 is disposed so that a portion thereof passes through the water Wt in the first mixture tank 13 of the mixing tank 11. To the re-supply pipe 87 disposed in the first mixture tank 13, a first heat exchange unit 88 is provided. The first heat exchange unit 88 performs heat exchange between the unconsumed fuel Flc flowing through the re-supply pipe 87 and the water Wt stored in the first mixture tank 13.

The re-supply pipe 87 is disposed so that a portion thereof passes through the water Wt in the water tank 57. The re-supply pipe 87 disposed in the water tank 57 is provided with a second heat exchange unit 89. The second heat exchange unit 89 performs heat exchange between the unconsumed fuel Flc flowing through the re-supply pipe 87 and the water Wt stored in the water tank 57.

In addition, insulation materials 7 and 8 are wound around at least part of the re-supply pipe 87 exposed to the air. In other words, the insulation material 7 and 8 are provided so as to cover a portion in contact with the air out of an outer surface of the re-supply pipe 87.

### <Switching valve>

Now, a description about the switching valve 90 will be given.

The switching valve 90 is a valve that switches the fuel supplied to the internal combustion engine 5 from the mixed fuel Fl or the fuel oil Fo flowing through the direct fuel supply system 81 to the unconsumed fuel Flc flowing through the re-supply pipe 87, when an amount of the unconsumed fuel Flc flowing through the re-supply pipe 87 of the fuel re-supply system 82 increases.

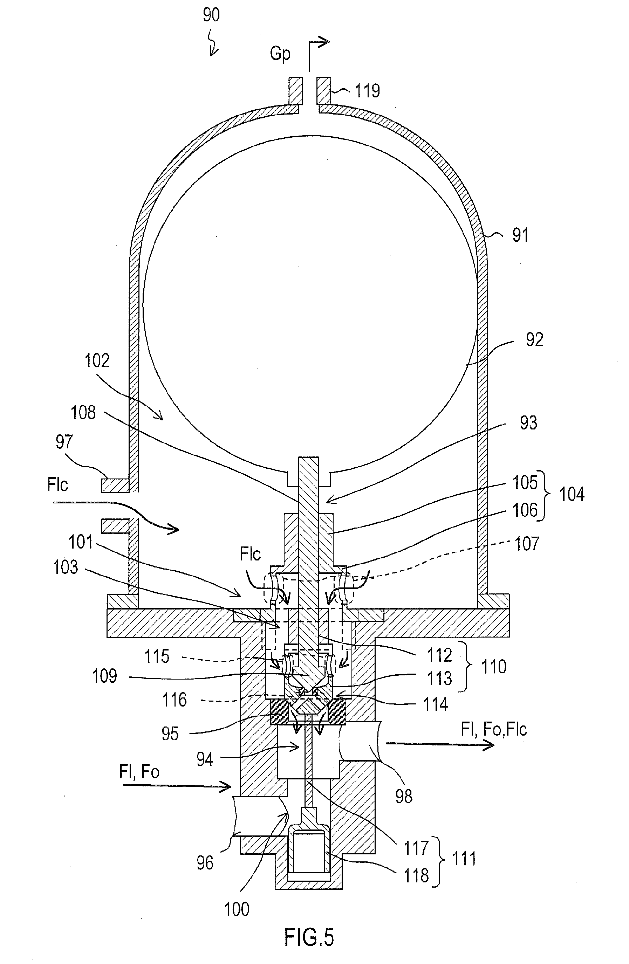

FIG. 5 is a diagram showing a schematic configuration of the switching valve 90 of the present embodiment.
As shown in FIG. 5, the switching valve 90 mainly includes a valve case 91, a float 92 that is accommodated in the valve case 91, a first valve body 93 connected to the float 92, a second valve body 94 that operates in conjunction with the first valve body 93, and an oil seal 95 that abuts against the first valve body 93 and the second valve body 94 to block the flow path in the re-supply pipe 87.

The valve case 91 includes a first inlet port 96, a second inlet port 97, and a discharge port 98, and has a flow path 100 from the first inlet port 96 to the discharge port 98, and a flow path 101 from the second inlet port 97 to the discharge port 98.

An upstream side (here, the side connected to the mixed fuel storage tank 31) of the mixed fuel flow pipe 83 forming the direct fuel supply system 81 is connected to the first inlet port 96. In another point of view, an upstream side (here, the side connected to the fuel tank 52) of the fuel oil flow pipe 84 is connected to the first inlet port 96. Further, a downstream side (here, the side connected to the internal combustion engine 5) of the mixed fuel flow pipe 83 is connected to the discharge port 98. In another point of view, the downstream side (the side connected to the internal combustion engine 5) of the fuel oil flow pipe 84 is connected to the discharge port 98.

In other words, the flow path 100 from the first inlet port 96 to the discharge port 98 functions as part of the mixed fuel flow pipe 83 (or the fuel oil flow pipe 84). The mixed fuel Fl or the fuel oil Fo flow through the flow path 100.

Further, the re-supply pipe 87 that constitutes the fuel re-supply system 82 is connected to the second inlet port 97. That is, the flow path 101 from the second inlet port 97 to the discharge port 98 functions as part of the re-supply pipe 87. The unconsumed fuel Flc flows through the flow path 101.

This flow path 101 is formed by the valve case 91, and is provided with an accumulation chamber 102 into which the unconsumed fuel Flc flows from the second inlet port 97, and a flow passage 103 into which the unconsumed fuel Flc flows from the accumulation chamber 102 to the discharge port 98. At an upper end portion of the valve case 91, a gas discharge port 119 is provided to which the gas flow pipe 9 (see FIG. 1) that is a pipe forming a flow path through which a vaporized gas Gp flows is connected. It should be noted that the gas flow pipe 9 allows the vaporized gas Gp to flow to the first mixture tank 13 of the mixing tank 11.

At a boundary between the accumulation chamber 102 and the flow passage 103, a valve guide portion 104 is provided. The valve guide portion 104 has an upper valve guide 105 which is formed into a cylindrical shape, and a lower valve guide 106 which is formed into a cylindrical shape having a larger diameter than the upper valve guide 105. Here, the valve guide portion 104 is disposed so that a space formed in an interior of the lower valve guide 106 is in communication with the flow passage 103. The lower valve guide 106 has a hole 107 that leads to the flow passage 103.

The float 92 is accommodated in the accumulation chamber 102. The first valve body 93 is connected to a lower end of the float 92 (lower side in the figure). The first valve body 93 has a stem 108 formed into a rod shape as a whole, and a locking portion 109 having a protrusion formed on a tip end side that is not connected to the float 92 of the stem 108. The first valve body 93 is disposed such that the stem 108 is slidable in a space formed in an interior of the upper valve guide 105.

The second valve body 94 has a valve body portion 110 that engages the first valve body 93, and a flow path blocking portion 111 that blocks the flow path 100 by being driven in conjunction with the first valve body 93. The valve body portion 110 has a tubular portion 112 formed into a tubular shape where the stem 108 of the first valve body 93 slides, and a box portion 113 formed in a box-like shape having an internal space in which the engaging portion 109 of the first valve body 93 is accommodated. At a lower end of the box portion 113, a first water-stop portion 114 formed so as to abut against the oil seal 95 is provided.

On a side wall of the box portion 113, a hole 115 that forms part of the flow passage 103 is provided. At a bottom of the box portion 113, a fuel passage hole 116 that forms part of the flow passage 103 is provided. It should be noted that the fuel passage hole 116 is a hole that is smaller in area than a cross section of the flow path 100. The fuel passage hole 116 is sealed by the locking portion 109 of the first valve body 93 located at a steady position, and is opened when the first valve body 93 is located at a drive position.

The oil seal 95 is formed into a ring shape, and is provided at a junction between the flow path 100 and the flow path 101 so that its opening functions as part of the flow path 101. When this oil seal 95 abuts against the first water-stop portion 114 of the second valve body 94 located at the steady position, the flow path 101 is sealed.

The flow path blocking portion 111 of the second valve body 94 has a rod-like member 117 and a second water-stop portion 118. The rod-like member 117 is a member shaped into a rod extending from a lower end of the valve body 110. The second water-stop portion 118 is formed on one of two ends of the rod-like member 117 that is not connected to the valve body portion 110.

In the switching valve 90, when an amount of the unconsumed fuel Flc flowing into the accumulation chamber 102 from the second inlet port 97 is small, the first valve body 93 is located at the steady position. At this time, a lower end of the engaging portion 109 of the first valve body 93 seals the fuel passage hole 116 of the box portion 113. At the same time, the first water-stop portion 114 provided at the lower end of the box portion 113 of the second valve body 94 abuts against the oil seal and seals the flow path 101 (i.e., flow passage 103).

However, in the switching valve 90, when the amount of the unconsumed fuel Flc flowing into the accumulation chamber 102 from the second inlet port 97 increases, the float 92 gains buoyancy and moves upward from the switching valve 90. At this time, the first valve element 93 is driven in conjunction with the move of the float 92, and a gap is formed between the lower end of the locking portion 109 of the first valve body 93, and the fuel passage hole 116 of the box portion 113. Then, the unconsumed fuel Flc flows into the flow path 100 from the fuel passage hole 116.

When the first valve body 93 is driven further, an upper end of the locking portion 109 of the first valve body 93 engages the lower end of the tubular portion 112 of the second valve body 94. Then, the second valve body 94 is driven in conjunction with the move of the first valve body 93, and a space is formed between the first water-stop portion 114 provided at the lower end of the box portion 113 of the second valve body 94 and the oil seal 95. Moreover, when the second valve body 94 is driven in conjunction with the move of the first valve body 93, the second water-stop portion 118 of the second valve body 94 is pulled upward from the switching valve 90 and seals the flow path 100.

In other words, when the amount of the unconsumed fuel Flc flowing through the re-supply pipe 87 of the fuel re-supply system 82 increases, the switching valve 90 seals the flow path 100 and opens the flow path 101.

### <Control system>

Now, the control system 130 of the fuel supply system 1 will be explained.

As shown in FIG. 6, the control system 130 includes a fuel float 25, which is one of sensors that detect a state of the fuel supply system 1, and a control unit 132 that controls a control object 131 in accordance with detection results of the sensors.

The control object 131 includes the fuel delivery pump 54, the water delivery pump 59, the lubricating oil delivery pump 74, a pump 46A, a pump 46B, the electrode plate 65, the oscillator 63, and the three-way valve 85.

When the fuel supply system 1 is started, the control unit 132 first of all drives each of the fuel delivery pump 54, the water delivery pump 59, and the lubricating oil delivery pump 74 for a time predefined for each of the pumps 54, 59, and 74. Thereby, the fuel delivery pump 54, the water delivery pump 59, and the lubricating oil delivery pump 74 respectively supply the fuel oil Fo, the water Wt, and the lubricating oil Lb to the first mixture tank 13 such that a ratio (i.e., specific ratio) of the volume of the water to the volume of all the liquids (i.e., fuel oil Fo, lubricating oil Lb, water Wt) stored in the mixing tank 11 is 6% or less (excluding 0%).

In the tank body 12 of the mixing tank 11, the fuel oil Fo, the water Wt, and the lubricating oil Lb are stored at the ratio of the fuel oil Fo delivered by the fuel delivery pump 54, the water Wt delivered by the water delivery pump 59, and the lubricating oil Lb delivered by the lubricating oil delivery pump 74.

At the same time, the control unit 132 drives the oscillator 63 to vibrate the vibrator 62, and energizes the electrode plates 65. Thereby, the water Wt stored in the water tank 57 is electrolyzed, and the gas Gs generated at this time is supplied to the first mixture tank 13. It should be noted that, in the water tank 57, the water Wt is stirred by vibration of the vibrator 62. Adhesion of bubbles to the electrode plate 65 is suppressed.

It should be noted that, in the fuel supply system 1 immediately after being started in this way, the control unit 132 sets a pressure of the working fluid supplied to the three-way valve 85 to less than a specified pressure. Therefore, in the three-way valve 85, the fuel oil flow pipe 84 is opened and the fuel oil Fo is supplied to the internal combustion engine 5. Out of the fuel oil Fo supplied to the internal combustion engine 5, the fuel oil Fo that has not been consumed flows through the re-supply pipe 87 of the fuel re-supply system 82 as the unconsumed fuel Flc.

Subsequently, the control unit 132 drives the pump 46A and generates an intermediate fuel Fi (one of the mixed fuel Fl) that is obtained by mixing the fuel oil Fo, the lubricating oil Lb, the water Wt and the gas Gs stored in the first mixture tank 13. At the same time, the control unit 132 drives the pump 46B to further mix the intermediate fuel Fi stored in the third mixture tank. Thereby, the mixed fuel Fl is generated.

In the mixed fuel Fl generated at this time, the ratio of the volume of the water Wt to the volume of the mixed fuel Fl (i.e., specific ratio) is 6% or less.
When the mixed fuel Fl generated as described above is stored in the mixed fuel storage tank 31, the control unit 132 sets the pressure of the working fluid supplied to the three-way valve 85 to the specified pressure or more. Thereby, in the three-way valve 85, the mixed fuel flow pipe 83 is opened, and the fuel supplied to the internal combustion engine 5 is switched from the fuel oil Fo to the mixed fuel Fl. A specific method for determining that the mixed fuel Fl is stored in the mixed fuel storage tank 31 is as follows. For example, it may be determined that mixed fuel Fl is stored in the mixed fuel storage tank 31 if elapsed time from the start of driving the pumps 46A and 46B is equal to a predefined time or more.

The mixed fuel Fl supplied to the internal combustion engine 5 as described above is combusted in the internal combustion engine 5. However, the unconsumed mixed fuel Fl out of the mixed fuel Fl supplied to the internal combustion engine 5 flows through the re-supply pipe 87 of the fuel re-supply system 82 as the unconsumed fuel Flc. As the unconsumed fuel Flc flowing through the re-supply pipe 87 increases, the switching valve 90 switches the fuel supplied to the internal combustion engine 5 from the fuel oil Fo or the mixed fuel Fl to the unconsumed fuel Flc.

In the control unit 132 after driving the pumps 46A and 46B to start generation of the mixed fuel Fl, control for driving each of the fuel delivery pump 54, the water delivery pump 59, and the lubricating oil delivery pump 74 is executed when the amount of the fuel oil Fo in a detection result at the fuel float 25 is equal to a predetermined amount or less.

### [Effects of embodiment]

As described above, according to the fuel supply system 1, it is possible in the mixed fuel generation device 10 to produce the mixed fuel Fl with the specific ratio of 6% or less.

Supply of such mixed fuel Fl to the internal combustion engine 5 and combustion thereof in the internal combustion engine 5 can improve the output of the internal combustion engine 5 as well as the combustion efficiency of the internal combustion engine 5.

Further, in the fuel supply system 1, the insulation materials 7 and 8 are wound at at least part of the re-supply pipe 87 of the fuel re-supply system 82 exposed to the air.
Therefore, a decrease in temperature of the fuel that has not been consumed (i.e., unconsumed fuel Flc) in the internal combustion engine 5, when the unconsumed fuel Flc is flowing through the re-supply pipe 87, can be inhibited. As a result, even when the fuel supply system 1 is used in cold climates, it is possible to inhibit water in the unconsumed fuel Flc flowing through the re-supply pipe 87 from freezing.

Furthermore, the re-supply pipe 87 of the fuel re-supply system 82 in the fuel supply system 1 is disposed so as to pass through the water Wt stored in the water tank 57 and the water Wt stored in the first mixture tank 13.

Since the unconsumed fuel Flc flowing through the re-supply pipe 87 has a high temperature, for example, even when the fuel supply system 1 is used in cold climates, it is possible to inhibit the water Wt stored in the water tank 57 or in the first mixture tank 13 from freezing.

In the meantime, when the fuel supply system 1 is mounted on a heavy truck, an amount of fuel consumed by an internal combustion engine mounted on the heavy truck is enormous. Therefore, a flow rate of the mixed fuel Fl or of the fuel oil Fo flowing through the direct fuel supply system 81 increases.

At this time, the pressure in the flow path of the direct fuel supply system 81 is lower than the pressure in the flow path of the fuel re-supply system 82. Thus, in a typical switching valve, there is a possibility that it becomes difficult to switch the fuel supplied to the internal combustion engine from the fuel oil Fo or the mixed fuel Fl supplied by the direct supply system 81 to the unconsumed fuel Flc supplied by the fuel re-supply system 82.

However, in the switching valve 90 of the present embodiment, the fuel passage hole 116 is formed that is smaller in area than the cross section of the flow path 100, and which is sealed by the locking portion 109 of the first valve body 93 located at the steady position, and is opened when the first valve body 93 is located at the drive position.

Therefore, even if the pressure in the flow path of the direct fuel supply system 81 is lower than the pressure in the flow path of the fuel re-supply system 82, it is possible to easily drive the first valve body 93.
In addition, in the switching valve 90, when the first valve body 93 is driven in conjunction with the upward movement of the switching valve 90 caused by gaining of buoyancy by the float 92, a space is formed between the lower end of the locking portion 109 of the first valve body 93 and the fuel passage hole 116 of the box portion 113. At this time, the unconsumed fuel Flc flows from the fuel passage hole 116 into the flow path 100.

As above, when the fuel passage hole 116 is opened and functions as a flow path of the fuel re-supply system 82, driving of the second valve body 94 is facilitated. As a result, the second valve body 94, in conjunction with the driving of the first valve body 93, blocks the flow path of the direct fuel supply system 81. Also, as the flow path for the fuel re-supply system 82 is expanded, it is possible to more reliably supply the unconsumed fuel Flc flowing through the re-supply pipe 87 to the internal combustion engine 5.

### [Other embodiments]

The foregoing has described an embodiment of the present invention. However, the present invention is not limited to the above embodiment, and can be carried out in various modes within a range not departing from the gist of the present invention.

In the above described embodiment, as a method for adjusting the amount of fluid each of the water delivery pump 59, the lubricating oil delivery pump 74, and the fuel delivery pump 54 delivers (hereinafter, referred to as pump flow adjustment control), the method is adopted of controlling the driving time of each of the pumps 54, 59, and 74, which are common in discharge capacity per unit time. However, the pump flow adjustment control is not limited to this method. For example, the pump flow adjustment control may be achieved by a method of adopting the water delivery pump 59, the lubricating oil delivery pump 74, and a fuel delivery pump 54 which are different in discharge capacity per unit time and controlling each of the pumps 54, 59, and 74 to have a common driving time, or a method that combines two of the method described above and the method adopted in the above embodiment. Furthermore, the flow rate of each of the water delivery pump 59, the lubricating oil delivery pump 74, and the fuel delivery pump 54 may be controlled by feedback control.

That is, any pump flow adjustment control method is acceptable if the specific ratio can be maintained to be 6% or less (excluding 0%), for all the liquids stored in the mixing tank 11 (i.e., fuel oil Fo, lubricating oils Lb, and water Wt).

In the above embodiment, a diesel engine is used as the internal combustion engine 5. However, the internal combustion engine 5 is not limited thereto, and, for example, may be a gasoline engine. In this case, instead of light oil, gasoline may be used as the fuel oil Fo. Further, the fuel oil Fo is not limited to light oil or gasoline, and may be kerosene or may be heavy oil. That is, any fuel oil will do if produced by purifying petroleum.

Further, in the above embodiment, the internal combustion engine 5 is introduced as an example of the combustion device. However, the combustion device of the present invention is not limited thereto, and, for example, may be an external combustion engine, or may be a device such as a boiler.

In the above embodiment, as an example of the heat insulation process of the present invention, the insulation materials 7 and 8 are wound around the re-supply pipe 87. However, the heat insulation process of the present invention is not limited thereto, and a well-insulated paint may be applied to an outer surface of the re-supply pipe 87.

The tree-way valve 85 in the above embodiment is configured to operate when the working fluid having the specified pressure or more is supplied. However, the three-way valve 85 is not limited thereto, and may be a solenoid valve.

Further, the mixing tank 11 of the above-described embodiment is equipped with three tanks, i.e., the first mixture tank 13, the second mixture tank 14, and the third mixture tank 15. However, the number of the mixture tanks provided in the mixing tank 11 is not limited thereto, and may be one or two. In other words, the mixing tank 11 may be provided with any number of mixture tanks. Furthermore, the mixed fuel generation device 10 of the above embodiment is equipped with the mixed fuel storage tank 31. However, the mixed fuel generation device 10 of the present invention may not be provided with the mixed fuel storage tank 31.

### [Correspondence between the embodiment and claims]

Finally, a relation between the description in the above embodiment and the description in the claims will be explained.

The fuel tank 52 in the above embodiment corresponds to a fuel tank in the claims, the water tank 57 corresponds to a water tank in the claims, the fuel delivery pump 54 corresponds to a fuel oil delivery unit in the claims, and the water delivery pump 59 corresponds to a water delivery unit in the claims. Further, the tank body 12 in the above embodiment corresponds to a mixture tank in the claims, the mixers 41 and 42 correspond to a mixer in the claims, and the mixing tank 11 corresponds to a mixing tank in the claims.

The gas flow pipe 66 in the above embodiment corresponds to a first gas supply system and a second gas supply system in the claims, the fuel supply system 80 corresponds to a fuel supply system in the claims, and the fuel re-supply system 82 corresponds to a fuel re-supply system in the claims. In addition, the switching valve 90 in the above embodiment corresponds to a switching valve in the claims.

## Claims

1. A mixed fuel generation method comprising a step of mixing a fuel oil and at least one additional fluid other than the fuel oil,
wherein one of the additional fluids is water, and
a specific ratio that is a ratio of a volume of the water to a volume of the mixed fuel is 6% or less.

2. The mixed fuel generation method according to claim 1, wherein the specific ratio is 1.75% or less.

3. The mixed fuel generation method according to claim 1 or 2, wherein one of the additional fluids is air.

4. The mixed fuel generation method according to claim 3, wherein air as the additional fluid contains hydrogen.

5. A mixed fuel generation device comprising:
a fuel tank that stores a fuel oil;
a water tank that stores water, which is at least one additional fluid;
a fuel oil delivery unit that delivers the fuel oil from the fuel tank;
a water delivery unit that delivers the water from the water tank; and
a mixing tank comprising:
a mixture tank that stores the fuel oil delivered by the fuel oil delivery unit and the water delivered by the water delivery unit at a ratio of a volume of the fuel oil delivered by the fuel oil delivery unit to a volume of the water delivered by the water delivery unit; and
a mixer that generates a mixed fuel by mixing at least the fuel oil and the water stored in the mixture tank at the ratio of the volume of the fuel oil to the volume of the water stored in the mixture tank,
wherein the water delivery unit defines an amount of the water delivered to the mixing tank from the water tank so that a specific ratio that is a ratio of the volume of the water to the volume of the mixed fuel is 6% or less.

6. The mixed fuel generation device according to claim 5, wherein
the water delivery unit defines the amount of the water delivered to the mixing tank from the water tank so that the specific ratio is 1.75% or less.

7. The mixed fuel generation device according to claim 5 or 6, wherein
the water tank comprises:
an electrolysis mechanism that electrolyzes the water stored in the water tank; and
a first gas supply system having a flow path that supplies to the mixture tank a gas generated by the water electrolyzed by the electrolysis mechanism,
wherein the mixer mixes the gas supplied to the mixture tank by the first gas supply system with the fuel oil and the water, as one of the additional fluids.

8. A fuel supply device comprising:
a mixed fuel generation device comprising: a fuel tank that stores a fuel oil; a water tank that stores water, which is an at least one additional fluid; a fuel oil delivery unit that delivers the fuel oil from the fuel tank; a water delivery unit that delivers the water from the water tank; and a mixing tank that includes a mixture tank that stores the fuel oil delivered by the fuel oil delivery unit and the water delivered by the water delivery unit at a ratio of a volume of the fuel oil delivered by the fuel oil delivery unit to a volume of the water delivered by the water delivery unit, and a mixer that generates a mixed fuel by mixing at least the fuel oil and the water stored in the mixture tank at the ratio of the volume of the fuel oil to the volume of the water stored in the mixture tank, wherein the water delivery unit defines an amount of the water delivered to the mixing tank from the water tank so that a specific ratio that is a ratio of the volume of the water to the volume of the mixed fuel is 6% or less;
a fuel supply system that has at least a flow path that supplies the mixed fuel generated in the mixed fuel generation device to a combustion device that is a device for combusting fuel; and
a fuel re-supply system that has a re-supply pipe, which is a pipe that supplies to the combustion device at least one of the mixed fuel that has not been consumed in the combustion device out of the mixed fuel supplied to the combustion device in the fuel supply system and the fuel oil that has not been consumed in the combustion device out of the fuel oil supplied to the combustion device,
wherein, in the fuel re-supply system, an adiabatic process is applied to at least part of an outer surface of the re-supply pipe exposed to outside air.

9. The fuel supply device according to claim 8, wherein
the re-supply pipe of the fuel supply re-supply system is provided to pass through the water stored in the water tank.

10. The fuel supply device according to claim 8 or 9, wherein
the re-supply pipe of the fuel supply re-supply system is provided to pass through the water stored in the mixture tank.

11. The fuel supply device according to one of claims 8 to 10, wherein
the water tank provided in the mixed fuel generation device includes an electrolysis mechanism that electrolyzes the water stored in the water tank, and
a second gas supply system is provided that has a flow path that supplies a gas generated by the water electrolyzed by the electrolysis mechanism to the combustion device.

12. The fuel supply device according to one of claims 8 to 11, further comprising
a switching valve that, when unconsumed fuel flowing through the re-supply pipe increases, switches the fuel supplied to the combustion device from the mixed fuel flowing through the fuel supply system to the unconsumed fuel flowing through the fuel re-supply system.

13. The fuel supply device according to claim 12, wherein
the switching valve comprising:
a first valve body that, when an amount of the unconsumed fuel flowing through the re-supply pipe reaches a predetermined amount or more, drives to open a fuel passage hole that is part of the flow path of the fuel re-supply system, is sealed by the first valve body itself, and is smaller in area than the flow path of the fuel supply system; and
a second valve body that drives in conjunction with the driving of the first valve body so as to block the flow path of the fuel supply system, and to expand the flow path of the fuel re-supply system.

14. The fuel supply device according to one of claims 8 to 13, wherein
the combustion device is an internal combustion engine mounted on an automobile, and
the fuel supply device is mounted on the automobile.

15. The fuel supply device according to claim 8, wherein
the water delivery unit defines the amount of the water delivered to the mixing tank from the water tank so that the specific ratio is 1.75% or less.

16. The fuel supply device according to claim 8, wherein
the water tank is provided with an electrolysis mechanism that electrolyzes the water stored in the water tank,
a first gas supply system is provided that has a flow path that supplies to the mixture tank a gas generated by the water electrolyzed by the electrolysis mechanism,
the mixer mixes with the fuel oil and the water the gas supplied to the mixture tank by the first gas supply system as one of the additional fluids.
